# FASCICULE DE BREVET EUROPEEN

(11) **EP 3 956 809 B1**
(45) Date de publication et mention de la délivrance du brevet: **06.05.2026**
(21) Numéro de dépôt: 20719200.6
(22) Date de dépôt: 20.04.2020
(51) Int. Cl.: G06V 30/10, G06V 10/82, G06V 30/194, G06V 30/244, G06V 30/40, G07D 7/00, G06F 18/2413

(54) **PROCÉDÉ DE TRAITEMENT D'IMAGE D'UN DOCUMENT D'IDENTITÉ**
BILDVERARBEITUNGSVERFAHREN FÜR EIN IDENTITÄTSDOKUMENT
IMAGE PROCESSING METHOD FOR AN IDENTITY DOCUMENT

(30) Priorité: 19.04.2019 FR 1904228
(43) Date de publication de la demande: 23.02.2022
(73) Titulaire: SURYS, 77607 Bussy-Saint-Georges (FR)
(72) Inventeur: PIC, Marc-Michel, 92100 Boulogne-Billancourt (FR); OUDDAN, Mohammed Amine, 94170 Le Perreux sur Marne (FR); MAHFOUDI, Gaël, 31410 Capens (FR); PIC, Xavier, 83690 Sillans-la-Cascade (FR)
(74) Mandataire: INNOV-GROUP
(86) Numéro de dépôt international: PCT/EP2020/060963
(87) Numéro de publication internationale: WO 2020/212619

(56) Documents cités:
- EP-A1- 3 511 868
- WO-A1-2004/051917
- JP-A- 2011 178 075
- YULIA S CHERNYSHOVA ET AL: "Optical Font Recognition in Smartphone-Captured Images, and its Applicability for ID Forgery Detection", ARXIV.ORG, CORNELL UNIVERSITY LIBRARY, 201 OLIN LIBRARY CORNELL UNIVERSITY ITHACA, NY 14853, 18 October 2018 (2018-10-18), XP081143908, DOI: 10.1117/12.2522955
- CHERNYSHOVA YULIA S ET AL: "Generation method of synthetic training data for mobile OCR system", PROCEEDINGS OF SPIE; [PROCEEDINGS OF SPIE ISSN 0277-786X VOLUME 10524], SPIE, US, vol. 10696, 13 April 2018 (2018-04-13), pages 106962G - 106962G, XP060101332, ISBN: 978-1-5106-1533-5, DOI: 10.1117/12.2310119

## Description

### DOMAINE DE L'INVENTION

La présente invention concerne le domaine du traitement d'image par apprentissage profond, ou « deep-learning » par anglicisme, pour la vérification des documents d'identité.

Un document d'identité est attribué à un porteur. Il comprend au moins une page de données, ou datapage par anglicisme pour un document d'identité tel qu'un passeport, qui est une page personnalisée au porteur du document et qui comprend un fond (graphique), le plus souvent une photographie du porteur et des données variables relatives au moins au porteur.

Un document d'identité peut être officiel, c'est-à-dire émanant d'un Etat ou d'une autorité administrative ; ou non officiel.

La présente invention concerne essentiellement les documents d'identité officiels régaliens, mais peut s'appliquer également à tout document officiel, notamment les titres de propriété.

Par concision on appelle ci-après par « document d'identité » tout document officiel ou non officiel, d'identité ou non, comprenant des données invariantes, c'est-à-dire dont le contenu et la position sont communes à au moins deux documents d'identité, indépendamment de l'identité du porteur du document d'identité, par exemple le libellé d'un champ tel que « nationalité » sur un passeport ou bien un élément graphique de sécurité tel qu'une guilloche; et comprenant des données variables, c'est-à-dire spécifiques à un document d'identité, par exemple le nom du porteur du document d'identité.

Il existe plusieurs **natures** de documents d'identité, par exemple les passeports, les cartes d'identité, les cartes de séjour, les permis de conduire, les cartes d'abonnement, etc., qui proviennent de tous les pays émetteurs.

Pour une même nature de document Il peut exister différents types de documents d'identité, par exemple un type de passeport « ordinaire », un type de passeport « de service » et un type de passeport « diplomatique ».

Certains documents d'identité comprennent des fontes à erreur, qui comprennent des erreurs volontaires et connues, en particulier sur les empattements.

Un même type de document d'identité peut comprendre plusieurs modèles. Par exemple un type de passeport « ordinaire » pour un pays donné peut comprendre plusieurs modèles, ou versions, dépendant notamment de leur date de fabrication.

On peut catégoriser les documents d'identité dans un ensemble de **classes,** telles que chaque classe est une combinaison unique notamment d'une nature, d'un type et d'un modèle de document d'identité.

Un document d'identité peut être authentique ou bien faux c'est-à-dire contrefait ou falsifié.

Un document d'identité contrefait est créé de toutes pièces, par exemple par un Etat ou par un contrefacteur. Selon les moyens investis dans la réalisation de la contrefaçon celle-ci est quasiment indétectable ou plus ou moins grossière.

Un document d'identité falsifié est un document d'identité authentique dont un ou plusieurs éléments sont modifiés frauduleusement.

Globalement les falsifications correspondent généralement soit à une modification des données variables, c'est-à-dire les données relatives au porteur du document ou au document lui-même, par exemple son patronyme, son âge, la date d'expiration du document etc., soit au remplacement de la photographie du porteur du document d'identité authentique par la photographie d'un tiers.

Les documents d'identité comprennant des fontes à erreur sont très difficilement falsifiés car le contrefacteur ne connait pas les erreurs volontaires.

Il existe également des documents d'identité vierge, c'est-à-dire non encore personnalisés officiellement, qui sont volés et dont la personnalisation est frauduleuse ; de tels documents sont appelés « volés-vierges ».

Or, les documents d'identité authentiques peuvent présenter différentes variations, y compris pour un même type.

Par exemple deux modèles distincts d'un même document d'identité peuvent présenter des différences de fabrication sans perdre de leur authenticité ni de leur validité à un même instant.

En outre, à l'émission d'un nouveau document d'identité authentique, il n'existe pas de faux document dudit document d'identité.

Enfin, il n'existe pas ou très peu de spécimen de documents d'identité, notamment officiels. Et ces spécimens sont remplis avec les mêmes personnalisations, ce qui rend difficile leur exploitation comme base d'apprentissage pour un algorithme de « deep learning. »

Pour chacune de ces raisons, et a fortiori pour l'ensemble d'entre elles, la vérification d'un document d'identité est relativement compliquée, d'autant plus que la date de vérification est proche de la date de fabrication dudit document ou du type dudit document.

A ce jour, la vérification d'un document d'identité est basée sur une analyse humaine et/ou sur une analyse informatique basée sur un algorithme de vérification impliquant une quantité importante de documents d'identité authentiques et qui nécessite une adaptation à chaque modèle et à chaque version de modèle.

Pour pallier à ces problèmes, il est proposé une solution basée sur l'intelligence artificielle qui vise à analyser au moins les données variables du document d'identité.

Dans ce domaine, il est connu le document « Optical Font Recognition in Smartphone-Captured Images and its Applicability for ID Forgery Detection » (Chernyshova et al., 2018-10-18, XP081143908, DOI : 10.1117/12.2522955. Toutefois, ce document prévoit un traitement numérique qui vise à faciliter la reconnaissance de caractères (OCR) et qui porte sur l'ensemble des caractères d'un alaphabet.

Contrairement à cet enseignement, la présente invention vise un traitement de chaque caractère pris individuellement, comme décrit ci-après.

### RESUME DE L'INVENTION

Plus précisément, l'invention concerne selon un premier de ses objets, un procédé de traitement d'image d'un document d'identité candidat qui comprend une page de données, le procédé comprenant des étapes consistant à :
- acquérir une image numérique de la page de données du document d'identité candidat.

Il est essentiellement caractérisé en ce qu'il comprend en outre :
- attribuer une classe ou une super-classe au document d'identité candidat par classification automatique de ladite image numérique, par un algorithme d'apprentissage automatique mis en œuvre préalablement sur un ensemble d'images de référence pendant une phase d'apprentissage,
- traiter l'image numérique pour obtenir un ensemble d'au moins une image intermédiaire dont le poids est inférieur ou égal au poids de ladite image numérique,
- discriminer ladite image intermédiaire par un réseau de neurones discriminateur, et
- émettre un signal de sortie en sortie du réseau de neurones discriminateur, dont la valeur est représentative de la probabilité que le document d'identité candidat soit un document authentique ou un faux.

Dans un mode de réalisation, l'étape d'attribution d'une classe ou d'une super-classe est mise en œuvre par un algorithme d'apprentissage non supervisé, par un réseau de neurones classificateur pré entraîné, de préférence un réseau de neurones convolutifs.

On peut prévoir préalablement à l'étape d'émission de signal de sortie, des étapes consistant à :
- extraire un ensemble d'au moins une zone parmi :
   une zone correspondant à tout ou partie de la zone de lecture automatique du document d'identité candidat,
   une zone correspondant au bandeau supérieur du document d'identité candidat, et
   une zone correspondant à la partie extérieure du document d'identité candidat,
   chaque zone comprenant des glyphes, d'au moins une même fonte ou un objet graphique similaire,
- extraire individuellement chaque glyphe de l'ensemble d'au moins une zone, par reconnaissance optique de glyphe,
- enregistrer chaque glyphe extrait sous forme d'image individuelle, et
- analyser les polices des glyphes extraits.

Dans un mode de réalisation, chaque image intermédiaire est obtenue par l'une parmi :
Une étape de traitement de chaque image individuelle par un réseau de neurones générateur,
Une étape de traitement de chaque image individuelle par un réseau de neurones récurrents,
Une étape de post-traitement de chaque image individuelle.

Dans un mode de réalisation, le premier réseau générateur est un auto encodeur, de préférence à convolutions.

Dans un mode de réalisation, l'étape de classification automatique comprend l'attribution d'une classe prédéterminée en fonction de l'une au moins parmi les caractéristiques suivantes :
la nature du document d'identité ;
le pays ou l'Etat à l'origine du document d'identité ;
le type de document d'identité ;
le numéro de version ou de génération du document d'identité

On peut prévoir en outre une étape d'augmentation de données pendant la phase d'apprentissage.

Dans un mode de réalisation, lorsque ledit ensemble d'au moins une zone comprend des données variables, le procédé comprend en outre une étape de floutage desdites données variables.

On peut prévoir en outre une étape consistant à contrôler des caractéristiques de sécurité optique du document d'identité.

Selon un autre de ses objets, la présente invention concerne un programme d'ordinateur comprenant des instructions de code de programme pour l'exécution des étapes du procédé selon l'invention, lorsque ledit programme est exécuté sur un ordinateur.

Grâce à la présente invention, l'apprentissage peut être réalisé en continu, permettant ainsi d'enrichir la base de données régulièrement, ce qui limite les risques de dérive.

La présente invention n'a pas besoin d'entraîner complètement ex-nihilo le système, elle peut avantageusement être mise en oeuvre à partir de réseaux pré entraînés, en particulier sur des documents d'identité ou sur des images ad hoc comprenant les glyphes mis en oeuvre sur les documents d'identité.

D'autres caractéristiques et avantages de la présente invention apparaîtront plus clairement à la lecture de la description suivante donnée à titre d'exemple illustratif et non limitatif et faite en référence aux figures annexées.

### Les dessins annexés illustrent l'invention :

[Fig. 1] illustre un mode de réalisation d'une page de données d'un passeport, et
[Fig. 2] illustre une matrice de confusion selon un mode de réalisation du procédé selon l'invention,
[Fig. 3] illustre un glyphe « A » en entrée d'un premier réseau générateur et en sortie du deuxième réseau discriminateur selon un mode de réalisation de l'invention,
[Fig. 4] illustre un mode de réalisation du procédé selon l'invention,
[Fig. 5] illustre un schéma de principe de l'invention, et
[Fig. 6] illustre un schéma de principe d'un GAN selon l'invention.

### DESCRIPTION DETAILLEE

La présente invention est basée sur une solution comprenant de l'intelligence artificielle. On prévoit une phase préalable d'apprentissage de glyphes avec des documents d'identité authentiques, puis une phase d'exploitation avec des documents d'identité candidats pendant laquelle de préférence il n'y a pas d'apprentissage. Le processus d'apprentissage est donc de préférence continu et le processus d'exploitation dissocié dans le temps de l'apprentissage.

On entend par glyphe une représentation graphique (parmi une infinité possible) d'un signe typographique, autrement dit d'un caractère, en particulier alphanumérique. Au sens de la présente invention, un glyphe peut également être une représentation graphique non significative, notamment un logo.

On entend par police d'écriture ou police de caractères, un ensemble de glyphes, c'est-à-dire de représentations visuelles de caractères d'une même famille, qui regroupe tous les corps et graisses d'une même famille, dont le style est coordonné, afin de former un alphabet, ou la représentation de l'ensemble des caractères d'un langage, complet et cohérent.

On entend par fonte de caractère ou « fonte » par concision, l'ensemble des glyphes ou caractères correspondant aux mêmes caractéristiques de corps, graisse et italique au sein d'une même police.

### Par exemple :

Garamond est une police de caractères ;
le Garamond romain gras 12 points est une fonte.

Comme exposé plus en détails ci-après, on entend par :
- « image source » : une image numérique d'un document d'identité authentique ou d'un document d'identité candidat ;
- « image de référence » : tout ou partie de l'ensemble d'images sources ;
- « image individuelle » : glyphe individuel extrait d'une image de référence ;
- « image intermédiaire » : image obtenue par l'une parmi :
   ∘ Une étape de traitement d'une image individuelle par un réseau de neurones générateur,
   ∘ Une étape de traitement d'une image individuelle par un réseau de neurones récurrents, et
   ∘ Une étape de post-traitement d'une image individuelle.

### Acquisition

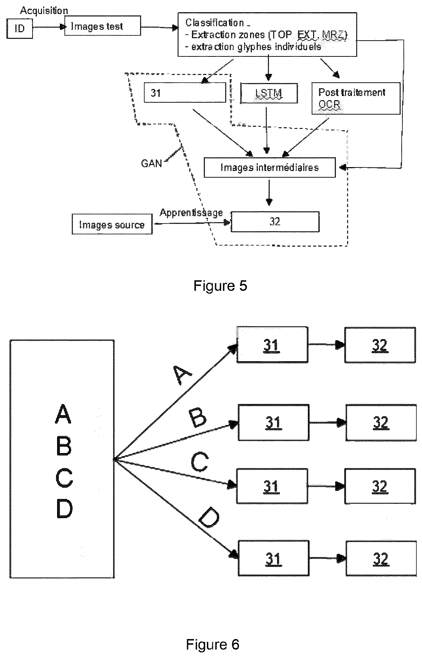

Le schéma de principe de l'invention est illustré sur la figure 5 et décrit en détail ci-après.

On prévoit d'acquérir une image numérique de la page de données d'un document d'identité ID. Cette image est appelée « image source » pour les documents d'identité authentiques utilisés en phase d'apprentissage et « image test » pour les documents d'identité candidats utilisés en phase d'exploitation.

L'image numérique de la page de données d'un document d'identité candidat subit un ensemble de traitements d'image, décrits ci-après, qui permettent d'évaluer l'appartenance dudit document d'identité candidat à une classe ou à une autre pour identifier ledit document d'identité candidat en vue de son authentification, c'est-à-dire de considérer celui-ci comme probablement vrai ou comme probablement faux, avec un degré de confiance raisonnable, c'est-à-dire supérieur à une valeur seuil prédéterminée.

Pour la phase d'apprentissage, on prévoit d'enregistrer dans une mémoire un ensemble d'images sources qui proviennent d'une pluralité d'images de documents d'identité authentiques.

En l'espèce, tout ou partie de l'ensemble d'images sources est enregistré sous forme d'une base de données sur un serveur sécurisé et dénommé ci-après ensemble d'images de référence. On peut donc prévoir une étape de sélection de tout ou partie de l'ensemble d'images sources pour générer l'ensemble d'images de référence.

En l'espèce, des acquisitions sont effectuées sur une pluralité de documents d'identité définissant une pluralité de classes pour générer un ensemble d'images de référence comprenant par exemple quelques dizaines de milliers d'images. Ces images sont obtenues par exemple par extraction d'images d'un flux vidéo. Chaque flux vidéo correspond typiquement à l'acquisition du document d'identité sous différentes conditions, par exemple différents angles d'éclairage, différents angles de vues avec et sans flash, différentes luminosités, etc.

Pour la phase d'exploitation, on prévoit également d'acquérir un ensemble d'images test comprenant au moins une image test. L'ensemble d'images test peut comprendre plusieurs images test, par exemple obtenues par extraction des trames d'un flux vidéo.

Pour les images sources et les images test, le flux vidéo est par exemple obtenu par un objet communicant, en particulier un téléphone intelligent.

### Augmentation de données

Pour la phase d'apprentissage, on prévoit sur chaque image source, par exemple extraite du flux vidéo, de réaliser une étape optionnelle d'augmentation de données, permettant de générer un ensemble de données plus grand, en faisant varier chaque image avec :
- des règles prédéterminées, en l'espèce des règles de couleur, ce qui permet d'anticiper différentes colorimétries de différentes caméras,
- des déformations par exemple géométriques qui correspondent à différents angles de visée,
- des résolutions différentes ce qui permet d'anticiper des qualités optiques des appareils différentes, ou des ré-échantillonnage pour limiter le poids de l'image pour le transfert,
- etc.

Ce qui revient à simuler différentes conditions d'acquisition du document d'identité.

On obtient ainsi un ensemble d'images de référence qui comprend par exemple plusieurs dizaines de milliers d'images de référence par classe de document d'identité, chaque classe de document d'identité étant authentique. L'ensemble d'images de référence est de préférence unique, c'est-à-dire couvrant l'ensemble des classes de document d'identité.

Ce grand ensemble d'images de référence a été déterminé pour permettre de caractériser ultérieurement, en phase d'exploitation, des documents candidats dont l'image transmise pour analyse est de basse résolution ou bien dont les couleurs ne sont pas transcrites de manière identique à celle de la prise de vue initiale notamment à cause de différences de performances des différents systèmes d'acquisition du marché ou bien encore du vieillissement du document.

L'ensemble d'images de référence est obtenu par exemple par l'acquisition d'images de plusieurs classes de documents faites par un objet communicant. En l'espèce, les acquisitions sont réalisées par un smartphone, qui est un objet communicant avantageux pour l'exploitation de l'invention.

Pour la phase d'exploitation, on peut prévoir aussi une étape optionnelle d'augmentation de données, de manière similaire ou identique à l'étape d'augmentation de données pour la phase d'apprentissage.

On prévoit ensuite deux phases principales, une première phase de classification, pour l'identification du type de document ; et une deuxième phase de reconnaissance des fontes, pour l'authentification du document. L'authentification du document peut être séquentielle avec la classification. Alternativement, lorsque la classification ne permet pas à elle seule de classifier un document d'identité candidat dans une unique classe, l'authentification peut éventuellement permettre d'attribuer une unique classe. Par exemple, la classification d'un document d'identité est parfois équivoque entre deux classes. Par exemple un passeport diplomatique peut être difficilement distinguable d'un passeport ordinaire. La tentative d'authentification successive par rapport à chaque classe peut aboutir à un taux de vraisemblance supérieur pour l'une des classes et donc à une prise de décision. On compare par rapport à des classes qui sont étiquettées. L'authentification peut aussi être réalisée si l'information du type de document est accessible par ailleurs, par exemple si elle est connue au moment de l'authentification.

### Identification du type de document d'identité

Pour connaitre le type de document d'identité, on prévoit, pour la phase d'apprentissage comme pour la phase d'exploitation, une étape de classification.

Une première étape de la classification consiste à classer l'ensemble des images de référence pour la phase d'apprentissage et les images candidates pour la phase d'exploitation selon un ensemble de classes prédéterminées, de préférence par apprentissage supervisé et par exemple par un réseau de neurones convolutifs 10 (connu sous son acronyme anglais CNN). En l'espèce, on prévoit le réseau de neurones VGG-16 développé par le Visual Geometry Group de l'université d'Oxford et qui est un réseau de neurones classificateur pré entraîné à plusieurs étages. Avantageusement, un réseau de neurones VGG-16 peut facilement être installé sur un smartphone, car la taille du fichier de représentation des poids de ce réseau peut rester raisonnable pour les processus d'installation, ce qui n'est pas forcément faisable avec des réseaux de neurones plus complexes, ayant des fichiers plus massifs.

La plupart des systèmes d'identification de documents se basent sur la lecture et l'interprétation des premiers glyphes de la zone MRZ qui contiennent le type de document, le pays émetteur, la date d'émission du document d'identité.

La classification utilisée ici permet d'identifier automatiquement la classe d'un document même si la zone MRZ est illisible ou tronquée et indépendamment de la photo du porteur du document d'identité puisque celle-ci n'est pas extraite pour la classification.

Les classes sont prédéterminées par exemple en fonction des caractéristiques intrinsèques et/ou extrinsèques des documents.

Par exemple pour un document d'identité tel qu'un passeport :
une première caractéristique correspond à la nature du document d'identité : passeport, carte d'identité, etc. ;
une deuxième caractéristique correspond au pays ou l'Etat à l'origine du document d'identité : par exemple France, Pays-Bas, etc.
une troisième caractéristique correspond au type de document d'identité: diplomatique, ordinaire, etc.
une quatrième caractéristique correspond à la version ou à la génération du document d'identité : par exemple génération 6 ; etc.

La combinaison de tout ou partie de ces caractéristiques permet de prédéterminer un ensemble de classes, par exemple :
Une première classe pour un passeport Français diplomatique de 6^{ème} génération,
Une deuxième classe pour un passeport Français ordinaire de 6^{ème} génération,
Une troisième classe pour un passeport Néerlandais diplomatique de 6^{ème} génération,
Etc.

Pour d'autres documents d'identité, par exemple un permis de conduire ; on définit d'autres classes basées éventuellement sur d'autres caractéristiques, par exemple le pays la catégorie de véhicules, la version, etc.

Chaque document authentique appartient à une unique classe. Cette classe peut être apprise ou déclarée pour la phase d'apprentissage.

On peut prévoir également de définir préalablement un ensemble de super-classes telles que chaque super-classe est une combinaison notamment d'une nature et de l'un au moins parmi : un ensemble d'au moins un type ; et un ensemble d'au moins un modèle de document d'identité. En effet, il est parfois difficile de reconnaitre rapidement un passeport ordinaire d'un passeport diplomatique, comme de distinguer deux versions différentes d'un même type de document.

En phase d'exploitation, le réseau de neurones mis en œuvre, en l'espèce un réseau de neurones VGG-16, permet donc d'attribuer soit une classe à un document d'identité candidat, soit, à défaut, de lui attribuer une super-classe. D'autres réseaux de neurones peuvent être mis en œuvre, par exemple Inception v3, etc.

### Extraction

Pour la classification on prévoit l'extraction de certaines zones prédéterminées de la page de données du document d'identité.

En l'espèce on prévoit de sélectionner les 3 zones suivantes :
une zone correspondant à tout ou partie de la MRZ,
une zone correspondant au bandeau supérieur TOP du document d'identité, et
une zone correspondant à la partie extérieure EXT du document d'identité.

Les 3 zones prévues peuvent comprendre différents glyphes selon différentes fontes de caractères.

Par MRZ en entend l'acronyme de Machine-Readable Zone en anglais, c'est-à-dire la zone de lecture automatique sur un document officiel, réservée à la lecture, à l'identification et à la validation de ce document, normée à 23.2 mm pour tous les documents répondants aux recommandations du standard ICAO 9303-2 version 7. La largeur de la zone de pied de page du document est celle du document lui-même (hauteur et largeur considérée en mode « paysage »). Par extension, si il n'y a pas de MRZ au sens ci-dessus, on entend par MRZ toute zone de largeur et de hauteur prédéfinies, la hauteur étant calculée à partir de la limite basse du document d'identité et la largeur étant calculée à partir de l'extrémité gauche ou droite du document d'identité lorsque celui-ci est observé dans le sens lecture.

Le bandeau supérieur TOP comprend des données variables ou fixes, par exemple pour un passeport français, les termes « passeport » et « république française », le numéro du passeport, le type de passeport et le code du pays émetteur.

Par extension, on entend par TOP toute zone de largeur et de hauteur prédéfinies, la hauteur étant calculée à partir de la limite haute du document d'identité et la largeur étant calculée à partir de l'extrémité gauche ou droite du document d'identité lorsque celui-ci est observé dans le sens lecture.

La partie extérieure EXT du document d'identité comprend également des données variables ou fixes, typiquement un en-tête de champ (donnée fixe) et la valeur de ce champ (donnée variable), par exemple l'en-tête de champ « Couleur des yeux » (donnée fixe) et la valeur de ce champ (donnée variable), par exemple « vert ». Elle couvre la hauteur du document d'identité, sur une largeur prédéterminée enregistrée dans une mémoire, la largeur étant déterminée à partir du bord droit ou du bord gauche du document d'identité lorsque celui-ci est observé dans le sens lecture.

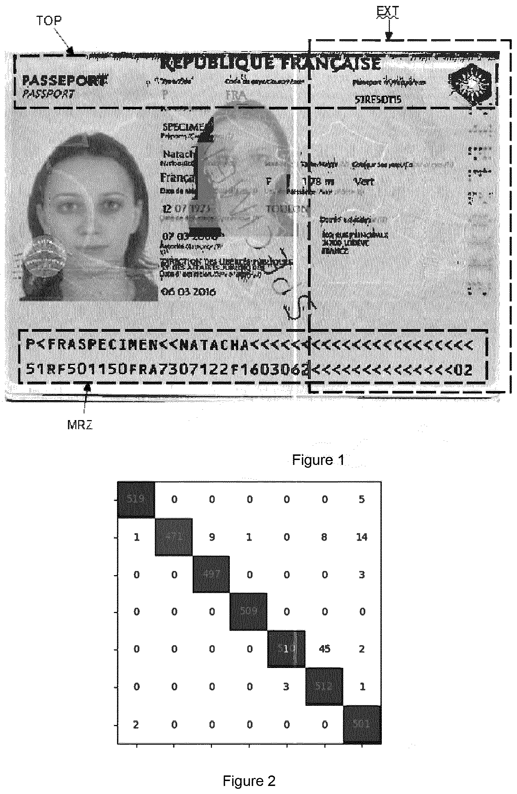

Par exemple, la partie gauche d'un document d'identité comprend généralement une photographie du porteur. Dans ce cas la partie extérieure EXT est la zone illustrée en pointillés sur la figure 2. Inversement, il arrive que la partie droite du document d'identité comprenne une photographie du porteur. Dans ce cas la partie extérieure EXT se situe sur la gauche du document d'identité (non illustré).

Avantageusement, la position des zones de données variables est connue, par exemple des documents ICAO 9303, accessibles par exemple à l'adresse https://www.icao.int/publications/pages/publication.aspx?docnum=9303.

De préférence, on prévoit pendant la phase d'apprentissage, une étape de floutage des données variables, afin d'éviter un sur-apprentissage, c'est-à-dire de manière à ce que l'apprentissage du système se fasse sur la base des caractéristiques invariantes de l'image et non pas sur des éléments de texte qui sont généralement variants d'un document d'identité à un autre.

On prévoit alors une étape d'apprentissage par le réseau de neurones sur l'une au moins de ces 3 zones MRZ, TOP et EXT, pour tout ou partie de l'ensemble des images de référence.

On peut prévoir de séparer les données disponibles pour l'apprentissage en deux jeux de données, dont un jeu est utilisé pour l'apprentissage et l'autre jeu est utilisé pour la qualification l'efficacité de l'apprentissage.

La phase d'apprentissage vise à déterminer la classe d'un document d'identité candidat auquel on applique ledit réseau de neurones.

Cependant, les méthodes neuronales ne sont pas fiables à 100%, donc l'appartenance d'un document d'identité candidat à plusieurs classes, ou l'impossibilité d'attribuer une classe à un document d'identité candidat restent possibles.

Dans le cas où au moins une partie de l'ensemble des images de référence comporte plusieurs documents d'identité du même type mais de modèles différents, on peut aussi connaître comment se situe le document candidat dans la classe de documents d'identité.

Pour déterminer l'authenticité d'un document d'identité candidat classé dans une classe unique prédéterminée, on doit ensuite mettre en oeuvre au moins l'un des deux traitements suivants :
- un traitement pour détecter une éventuelle manipulation des fontes des glyphes,
- un traitement pour détecter une éventuelle manipulation de l'image.

Pour un document d'identité classé dans plusieurs classes, l'un au moins des deux traitements ci-dessus est effectué pour chaque classe dudit document. Le résultat de l'authentification peut permettre in fine de déterminer la classe du document d'identité.

### Reconnaissance des fontes des glyphes

On prévoit une étape de reconnaissance des fontes de glyphes sur chacune des zones extraites (non floutées).

Il s'agit de séparer et d'apprendre chaque glyphe de chaque fonte dans chaque zone. Chaque glyphe est donc appris individuellement. On notera d'ailleurs qu'il peut exister plusieurs fontes par zone.

En règle générale, la fonte de la zone MRZ est normalisée et devrait être de l'OCR-B. Néanmoins, il peut exister plusieurs variantes de cette fonte et il arrive aussi que ce ne soit pas de l'OCR-B.

En outre, les fontes des autres zones sont libres et un certain nombre de pays utilisent des fontes privées dédiées. La fabrication d'un document d'identité peut être réalisée avec des fontes spéciales, c'est-à-dire non préexistantes en tant que telles dans le commerce. Certaines fontes spéciales peuvent être basées sur des fontes préexistantes dans le commerce qui ont été modifiées. On parle de « fontes à erreurs » pour une catégorie particulière de ces fontes où des éléments tels que les barres de sérif de certains glyphes sont volontairement omises ou indûment rajoutées dans des orientations anormales pour créer une différenciation visible (mais discrète) par rapport à la fonte originale.

Enfin, il est à noter que le mode d'impression (jet d'encre, laser ou autre), en combinaison avec la nature du substrat du support d'impression (papier naturel, synthétique, ou plastique) peut également transformer légèrement l'aspect imprimé de la fonte initiale.

En phase d'apprentissage, on prévoit donc un apprentissage de chacun des glyphes de chacun des alphabets de chacun des documents d'identité de l'ensemble de référence, c'est-à-dire de chaque classe. Chaque glyphe est appris individuellement, pour chaque fonte de chaque classe, où la classe du document d'identité authentique est connue. Contrairement à l'apprentissage précédent, il n'y a pas d'opération de floutage des zones images utilisées pour ce traitement. De préférence l'apprentissage est mis en œuvre sur plusieurs documents d'identité authentiques plutôt que sur un unique spécimen, de sorte à avoir le maximum de glyphes différents, et dans des conditions différentes, ce qui optimise l'apprentissage.

L'étape de reconnaissance de glyphes consiste à extraire chacun des glyphes de chaque champ de texte par reconnaissance optique de caractère (OCR) 20, dans l'ensemble des zones.

Chaque glyphe extrait est enregistré sous forme d'une image individuelle, correspondant à un segment de l'image source ou de l'image test. Une image segmentée est donc une partie de l'image source ou de l'image test comprenant un unique glyphe.

Par exemple on peut mettre en œuvre le logiciel Tesseract développé aujourd'hui par la société Google, qui permet d'extraire chaque glyphe individuellement grâce à des boites englobantes.

Il n'y a donc pas obligatoirement de détourage des glyphes. Toutefois, on peut prévoir une étape de nettoyage des glyphes consistant à détourer le glyphe, c'est-à-dire isoler le glyphe par rapport au fond.

A ce stade, chaque glyphe individuel est donc une image individuelle.

On prévoit alors de créer une image intermédiaire, selon l'une quelconque des 3 variantes ci-dessous, chaque image intermédiaire étant une image individuelle ou un traitement d'une image individuelle respective.

### 1^{ère} variante : auto-encodeur

Dans une première variante, on prévoit un premier réseau de neurones 31 qui est un réseau générateur alimenté en entrée par un ensemble de représentants (instances) d'un glyphe unique, extraits sous forme d'images individuelles depuis la ou les images source ou l'image test, et configuré pour générer en sortie un ensemble d'images intermédiaires.

En l'espèce, chaque image individuelle en entrée du générateur correspond à un glyphe individuel.

En l'espèce, le premier réseau (générateur) 31 est un auto-encodeur, c'est-à-dire un réseau de neurones artificiels utilisé pour l'apprentissage non supervisé de caractéristiques discriminantes.

De préférence, on prévoit une pluralité d'auto-encodeurs, en l'espèce mis en parallèle, chaque auto-encodeur possédant un noyau respectif, permettant d'apporter une précision respective. Chaque auto-encodeur est alimenté en entrée par la même image issue de l'étape de reconnaissance des fontes de glyphes et émet en sortie une image de sortie respective.

En l'espèce, on prévoit autant d'auto-encodeurs que de type de glyphes (un auto-encodeur pour les « a », un autre auto-encodeur pour les « b », etc.). De même, on prévoit un réseau discriminateur, décrit ultérieurement, par type de glyphe, comme illustré figure 6.

Dans ce cas, l'image intermédiaire correspondant au glyphe individuel issu de l'étape de reconnaissance des fontes de glyphes et entré dans l'ensemble des auto-encodeurs est la résultante de la superposition des images de sortie de l'ensemble des auto-encodeurs.

Un auto-encodeur comprend deux parties : un encodeur 311 et un décodeur 312. De préférence, l'auto-encodeur est à convolutions.

L'encodeur comprend un ensemble de couches de neurones qui traitent les données d'entrée afin de construire de nouvelles représentations dites "encodées" 33 qui constituent ensemble une nouvelle représentation du jeu de données, plus compacte, c'est-à-dire présentant moins de descripteurs, ce qui permet de réduire la dimensionnalité dudit jeu de données.

Le décodeur comprend un autre ensemble de couches de neurones qui reçoivent les représentations dudit jeu de données en sortie de l'encodeur et qui, à leur tour, les traitent afin d'essayer de reconstruire les données d'entrée.

En l'espèce chaque pixel de chaque glyphe de chaque alphabet est une donnée d'entrée. En sortie de l'encodeur, la représentation du jeu de données est plus compacte par exemple d'un facteur 100.

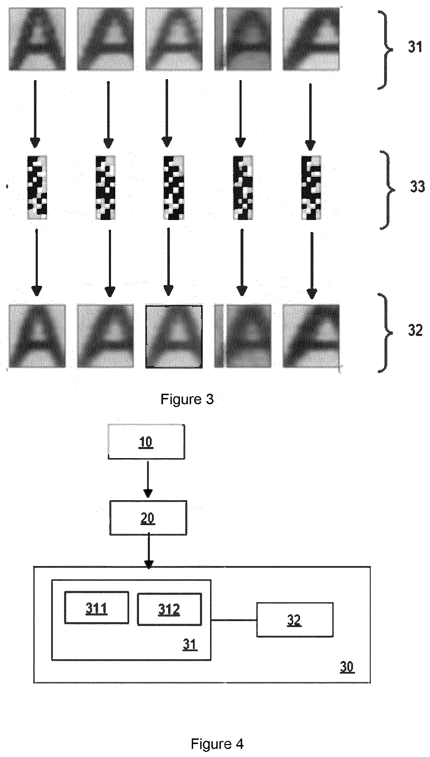

Par exemple, des essais ont été réalisés et sont illustrés sur la figure 3. La 1^{ère} ligne de la figure 3 illustre un ensemble de glyphes individuel issus de l'étape de reconnaissance de glyphes, en l'espèce des glyphes « A », en entrée d'un auto-encodeur 31.

La 2^{ème} ligne de la figure 3 illustre l'ensemble d'images encodées 33, en l'espèce codées sur 36 octets et représentés par des codes de couleurs en sortie de l'auto-encodeur 31.

La dernière ligne de la figure 3 illustre les glyphes individuels reconstruits par un réseau discriminateur 32 à partir des images encodées 33.

De préférence, on prévoit également une étape d'augmentation de données sur l'ensemble des images encodées 33, par exemple par génération de bruit sur les images encodées 33, ce qui permet par exemple de simuler le vieillissement d'un document d'identité, la façon dont le document d'identité est perçu par différents capteurs, etc. Cette augmentation de données se distingue donc de l'augmentation de données décrite précédemment et relative aux conditions optiques de prise de vue des documents d'identité.

De préférence, les images encodées 33 augmentées participent à la phase d'apprentissage de l'auto-encodeur.

Chaque glyphe individuel issu de l'étape de reconnaissance des fontes de glyphes est entré dans l'auto-encodeur.

Dans cette première variante, on obtient en sortie de l'auto encodeur un ensemble d'images intermédiaires, chaque image intermédiaire correspondant à un glyphe individuel.

Dans cette première variante, l'auto-encodeur 31 et le deuxième réseau 32 discriminateur, adversaire du générateur et décrit ultérieurement car commun aux 3 variantes, constituent des réseaux adverses génératifs ou GANs pour l'acronyme de « generative adversarial networks » en anglais qui sont une classe d'algorithmes d'apprentissage non-supervisé.

Les GAN classiques (https://en.wikipedia.org/wiki/Generative adversarial network) présentent une rétropropagation du réseau discriminateur vers le réseau générateur. Contrairement à ces réseaux GAN classiques, un GAN au sens de la présente invention comprend également un réseau générateur et un réseau discriminateur mais ne présente pas de rétropropagation.

En l'espèce on a, par glyphe, un réseau générateur, en particulier un auto-encodeur 31, qui apprend ledit glyphe unique, extrait sous forme d'images individuelles depuis la ou les images source, et qui génère un ensemble d'images intermédiaires respectives.

En phase d'apprentissage, par glyphe, le réseau discriminateur 32 est alimenté à la fois par l'ensemble d'images individuelles depuis la ou les images source, qui sont des images « vraies », et par l'ensemble d'images intermédiaires respectives, qui sont des variantes des images « vraies ».

En phase d'apprentissage, par glyphe, le réseau discriminateur 32 est également alimenté par un ensemble de mêmes glyphes mais connus comme « faux ».

On a ainsi un apprentissage par perte de triplet, ou « triplet loss » par anglicisme https://en.wikipedia.org/wiki/Triplet_loss), dans lequel on définit la distance, ou marge, α comme une valeur seuil prédéterminée.

Selon l'invention, on a donc un GAN par glyphe (un GAN pour les « a », un GAN pour les « b », etc.).

Dans un GAN, deux réseaux sont placés en compétition. Le premier réseau 31 est un générateur alimenté en entrée par un ensemble de glyphes extraits sous forme d'images individuelles depuis l'image source ou l'image test, et configuré pour générer en sortie un ensemble d'images intermédiaires.

Pendant la phase d'apprentissage, on met en entrée et en sortie de l'auto-encodeur des images identiques, ce qui permet de régler les poids du réseau de neurones par rétro propagation. La phase d'apprentissage règle les poids du réseau VGG16 pour chaque glyphe de chaque police. Ce qui équivaut à ce que chaque glyphe extrait est introduit dans son propre réseau discriminateur.

L'apprentissage est terminé quand le nombre de valeurs reconnues comme vraies par le réseau discriminateur est supérieur à une valeur seuil prédéterminée.

En phase d'exploitation, seul le réseau discriminateur est mis en oeuvre. Il est alimenté par un ensemble d'images test et détermine, sur la base de son apprentissage, si le glyphe de l'image test qu'il reçoit en entrée est un « vrai » ou un « faux ».

On peut prévoir en outre une étape consistant à transformer l'espace de représentation de l'image intermédiaire.

En l'espèce, on prévoit de convertir l'image intermédiaire de l'espace RGB à l'espace chromatique L*a*b* CIE 1976, généralement nommé CIELAB, qui est une visualisation en coordonnées cylindriques des couleurs. Alternativement, on peut prévoir un codage sphérique, logarithmique ou autre.

Transformer l'espace de représentation permet d'augmenter les signaux faibles, donc de pouvoir détecter des faux documents d'identité plus facilement. En l'espèce, la transformation en CIELAB permet de détecter les tâches colorées présentes sur la superposition des différentes images dans le cas des faux documents d'identité. En particulier lorsque la fonte authentique est une « fonte à erreur » et qu'elle diffère volontairement par exemple par la présence ou l'absence de traits de sérif sur certains bords des caractères.

### 2^{ème} variante : LSTM

Dans une deuxième variante, on prévoit un réseau de neurones récurrents, ou LSTM par acronyme de Long Short-Term Memory en anglais, alimenté en entrée par un ensemble de glyphes extraits sous forme d'images individuelles depuis l'image source ou l'image test, et qui permet d'obtenir en sortie un ensemble d'images intermédiaires qui correspondent chacune à une très bonne segmentation du glyphe obtenu à l'issue de l'étape de reconnaissance de glyphes, par cosegmentation. Cette variante s'applique particulièrement lors de l'acquisition de séquences d'images ou de vidéo du document d'identité d'origine et que l'on peut reconstituer une séquentialité entre les glyphes de même catégorie.

L'image intermédiaire est la résultante d'un assemblage d'images superposées issues d'une séquence d'images sources ou test.

Dans cette variante, la cosegmentation implique que chaque image intermédiaire obtenue en sortie du LSTM est obtenue par traitement d'une séquence d'images segmentées, où chaque image segmentée de la séquence comprend un même glyphe individuel issu de l'étape de reconnaissance de glyphes.

Une séquence d'images segmentées représente l'évolution d'un glyphe dans le temps de leur acquisition. Pour une séquence donnée, chaque image segmentée de la séquence correspond à un glyphe donné d'une image source respective, où chaque image source respective correspond à une image source unique augmentée.

On a donc une séquence d'images segmentées en entrée du LSTM. En sortie du LSTM, on a une image intermédiaire unique, issue de la séquence d'images segmentées en entrée du LSTM et correspondante aux contours les plus probables du glyphe. Donc les plus distinguables ou identifiables vis-à-vis de l'original.

### 3^{ème} variante : post-traitement OCR

Dans une troisième variante, on prévoit une étape de post-traitement de l'image issue de l'étape de reconnaissance de glyphes.

Dans cette variante, chaque image intermédiaire obtenue en sortie du post-traitement est obtenue par traitement d'une seule image source ou image test segmentée, qui comprend un même glyphe individuel issu de l'étape de reconnaissance de glyphes.

L'étape de post-traitement consiste à améliorer la qualité visuelle de l'image issue de l'étape de reconnaissance de glyphes, par exemple par rotation, redimensionnement, redressement, nettoyage des points aberrants etc.

Cette étape permet d'augmenter la dispersion des faux documents d'identité par rapport au centroïde du nuage des vrais documents d'identité.

Outre les 3 variantes précédemment décrites, on peut prévoir également une fonction invariante, c'est-à-dire que l'on peut prévoir d'introduire directement les images individuelles de chaque glyphe individuel en entrée du réseau discriminateur décrit ci-après, de sorte que chaque image individuelle soit une image intermédiaire.

On peut aussi prévoir de mettre en oeuvre successivement deux variantes quelconques parmi les trois variantes ci-dessus, ou même les trois variantes, pour une prise de décision utilisant trois fois plus d'indices.

### Réseau discriminateur 32

L'authentification d'un document d'identité est réalisée par un réseau de neurones, dit réseau discriminateur 32, dont, en phase d'apprentissage, on alimente l'entrée par un ensemble d'images intermédiaires selon l'une quelconque des variantes précédentes.

Par exemple, le réseau discriminateur 32 est le réseau discriminateur d'un GAN décrit précédemment. Comme décrit précédemment également, on peut prévoir une pluralité de réseaux discriminateurs 32, un par type de glyphe. Par concision toutefois, on ne décrira qu'un réseau discriminateur 32.

De préférence on prévoit comme réseau discriminateur un réseau de neurones convolutifs 10. En l'espèce, on prévoit le réseau de neurones VGG-16. L'apprentissage du réseau discriminateur sur les images sources permet de détecter une éventuelle manipulation des fontes des glyphes sur les images test, pour détecter une éventuelle manipulation du document d'identité. On peut également réaliser un apprentissage du réseau discriminateur sur les images test.

Le discriminateur est configuré pour détecter si l'échantillon est réel ou s'il est généré par le générateur. L'apprentissage du réseau de neurones est « finalisé » lorsque le discriminateur ne peut plus de distinguer une image encodée (générée par l'encodeur 311) d'une image réelle, c'est-à-dire appartenant à l'ensemble des images de référence.

### Authentification

Pour chaque glyphe individuel dont une image intermédiaire alimente l'entrée du réseau discriminateur 32, ledit réseau discriminateur 32 présente deux niveaux de sorties : un premier niveau de sortie selon lequel le glyphe individuel est considéré comme probablement authentique, et un deuxième niveau de sortie selon lequel le glyphe individuel est considéré comme probablement faux.

Un glyphe individuel est considéré comme probablement authentique lorsqu'il correspond à un glyphe appris pendant la phase d'apprentissage, c'est-à-dire lorsque son réseau discriminateur ne fait plus la différence entre le glyphe individuel et le glyphe correspondant appris.

Un document d'identité présente plusieurs glyphes de plusieurs fontes. Pour un document d'identité candidat, il peut donc être avantageux de mettre en œuvre une combinaison des niveaux de sortie des réseaux discriminateurs 32 pour l'ensemble des images intermédiaires et de générer un signal de sortie global correspondant à une fonction mathématique prédéfinie signifiant que le document d'identité candidat est probablement authentique ou probablement faux avec un niveau de certitude plus important. Cette fonction peut être implémentée par exemple au moyen d'un vote à la majorité, d'un vote qualifié, d'un vote pondéré, etc...

Par exemple, un document d'identité candidat pourra être considéré comme authentique en effectuant un ratio du nombre de glyphes reconnus comme valides sur le nombre de glyphes reconnus comme invalides dudit document, ou sur le nombre total de caractère reconnus, suivi éventuellement d'une étape de seuillage dudit ratio.

On peut également pondérer le résultat global en affectant les glyphes d'un poids individuel en fonction de la zone dont ils sont extraits. Par exemple un glyphe « A » de la zone MRZ peut avoir un poids différent d'un glyphe « A » de la zone TOP.

On peut également utiliser un apprentissage par réseau de neurones pour optimiser ces poids relatifs.

La présente invention peut être mise en œuvre sur d'autres glyphes que les glyphes imprimés, par exemple elle est applicable aux fontes perforées ou encore aux logos. En effet un logo de petite taille et suffisamment contrasté est proche d'un caractère d'une fonte.

Avantageusement la présente invention peut être mise en œuvre par un objet communicant, en particulier un smartphone.

## Revendications

1. Procédé de traitement d'image d'un document d'identité candidat qui comprend une page de données comprenant plusieurs glyphes de plusieurs fontes, le procédé comprenant une étape consistant à :
- acquérir une image numérique de la page de données du document d'identité candidat, optionnellement par un objet communicant, chaque image numérique pouvant être en outre extraite d'un flux vidéo enregistré par ledit objet communicant ;
**caractérisé en ce qu'**il comprend en outre des étapes consistant à :
- attribuer une classe ou une super-classe au document d'identité candidat par classification automatique de ladite image numérique par un algorithme d'apprentissage automatique mis en œuvre sur un ensemble d'images de référence pendant une phase d'apprentissage pendant laquelle chaque glyphe est appris individuellement pour chaque fonte de chaque classe,
- extraire un ensemble de glyphes de l'image numérique et enregistrer chaque glyphe sous forme d'image individuelle,
- traiter chaque image individuelle pour obtenir un ensemble d'au moins une image intermédiaire, chaque image intermédiaire correspondant à un glyphe individuel,
chaque image intermédiaire étant obtenue par au moins l'une des étapes parmi :
Une étape de traitement de chaque image individuelle par un réseau de neurones générateur,
Une étape de traitement de chaque image individuelle par un réseau de neurones récurrents, et
Une étape de post-traitement de chaque image individuelle,
- discriminer chaque glyphe de chaque fonte de ladite image intermédiaire par un réseau de neurones discriminateur respectif, chaque glyphe individuel étant considéré comme probablement authentique lorsqu'il correspond à un glyphe appris pendant une phase d'apprentissage, et
- émettre un signal de sortie par combinaison des signaux de sortie des réseaux de neurones discriminateurs, dont la valeur est représentative de la probabilité que le document d'identité candidat soit un document d'identité authentique ou un faux ;
le procédé comprenant préalablement une étape d'apprentissage de chacun des glyphes de chacun des alphabets de chacun des documents d'identité d'un ensemble de référence, chaque glyphe étant appris individuellement, pour chaque fonte de chaque classe, où la classe de chaque document d'identité authentique est connue ; l'apprentissage étant de préférence mis en œuvre sur plusieurs documents d'identité authentiques ;
l'authentification d'un document d'identité étant réalisée par l'ensemble de réseau de neurones discriminateur, dont, en phase d'apprentissage, on alimente l'entrée par un ensemble d'images intermédiaires.

2. Procédé selon la revendication 1, dans lequel l'étape d'attribution d'une classe ou d'une super-classe est mise en œuvre par un algorithme d'apprentissage non supervisé, par un réseau de neurones classificateur pré entraîné, de préférence un réseau de neurones convolutifs.

3. Procédé selon l'une quelconque des revendications précédentes, comprenant préalablement à l'étape d'émission de signal de sortie, des étapes consistant à :
- extraire un ensemble d'au moins une zone parmi :
- une zone correspondant à tout ou partie de la zone de lecture automatique (MRZ) du document d'identité candidat,
- une zone correspondant au bandeau supérieur (TOP) du document d'identité candidat, et
- une zone correspondant à la partie extérieure (EXT) du document d'identité candidat,
chaque zone comprenant des glyphes, d'au moins une même fonte,
- extraire individuellement chaque glyphe de l'ensemble d'au moins une zone, par reconnaissance optique de glyphe, et
- comparer chaque glyphe extrait à son glyphe correspondant appris pendant la phase d'apprentissage ;
le procédé comprenant optionnellement en outre, lorsque ledit ensemble d'au moins une zone comprend des données variables, une étape de floutage desdites données variables pendant la phase d'apprentissage.

4. Procédé selon l'une quelconque des revendications précédentes, dans lequel
L'étape de traitement de chaque image individuelle par un réseau de neurones récurrents permet d'obtenir en sortie un ensemble d'images intermédiaires qui correspondent chacune à une segmentation du glyphe obtenu à l'issue de l'étape de reconnaissance de glyphes, par cosegmentation.

5. Procédé selon l'une quelconque des revendications précédentes, dans lequel le réseau de neurones générateur est un auto encodeur, de préférence à convolutions.

6. Procédé selon l'une quelconque des revendications précédentes, dans lequel l'étape de classification automatique comprend l'attribution d'une classe prédéterminée en fonction de l'une au moins parmi les caractéristiques suivantes :
la nature du document d'identité ;
le pays ou l'Etat à l'origine du document d'identité ;
le type de document d'identité ;
le numéro de version ou de génération du document d'identité

7. Procédé selon l'une quelconque des revendications précédentes, comprenant en outre une étape d'augmentation de données pendant la phase d'apprentissage.

8. Procédé selon l'une quelconque des revendications précédentes, dans lequel le signal de sortie est l'un parmi :
- un vote à la majorité,
- un vote qualifié, et
- un vote pondéré
des signaux de sortie des réseaux de neurones discriminateurs.

9. Procédé selon l'une quelconque des revendications précédentes, comprenant en outre une étape consistant à contrôler des caractéristiques de sécurité optique du document d'identité.

10. Procédé selon l'une quelconque des revendications 3 à 9, comprenant une étape consistant à affecter les glyphes d'un poids individuel en fonction de la zone dont ils sont extraits.

11. Procédé selon l'une quelconque des revendications précédentes, comprenant une étape consistant à considérer un document d'identité candidat comme authentique en effectuant un ratio du nombre de glyphes reconnus comme valides sur le nombre de glyphes reconnus comme invalides dudit document, ou sur le nombre total de caractère reconnus, suivi éventuellement d'une étape de seuillage dudit ratio.

12. Programme d'ordinateur comprenant des instructions de code de programme pour l'exécution des étapes du procédé selon l'une quelconque des revendications précédentes, lorsque ledit programme est exécuté sur un ordinateur.

## Patentansprüche

1. Verfahren zur Verarbeitung eines Bildes eines potenziellen Ausweisdokuments, das eine Datenseite mit mehreren Glyphen aus mehreren Schriftarten umfasst, wobei das Verfahren einen Schritt umfasst, der darin besteht
- Erfassen eines digitalen Bildes der Datenseite des potenziellen Ausweisdokuments, optional durch ein kommunizierendes Objekt, wobei jedes digitale Bild zusätzlich aus einem von dem kommunizierenden Objekt aufgezeichneten Videostream extrahierbar ist;
**dadurch gekennzeichnet, dass** es ferner die folgenden Schritte umfasst
- Zuweisen einer Klasse oder Oberklasse zu dem potenziellen Ausweisdokument durch automatisches Klassifizieren des digitalen Bildes unter Verwendung eines maschinellen Lernalgorithmus, der während einer Lernphase, in der jedes Glyph für jede Schriftart in jeder Klasse einzeln gelernt wird, auf einen Satz von Referenzbildern angewendet wird,
- Extrahieren einer Reihe von Glyphen aus dem digitalen Bild und Speichern jeder Glyphe als individuelles Bild,
- Verarbeiten jedes einzelnen Bildes, um einen Satz von mindestens einem Zwischenbild zu erhalten, wobei jedes Zwischenbild einem einzelnen Glyphen entspricht,
wobei jedes Zwischenbild durch mindestens einen der folgenden Schritte erhalten wird: einen Schritt der Verarbeitung jedes einzelnen Bildes durch ein neuronales Netzwerk
generatives neuronales Netzwerk,
einem Schritt der Verarbeitung jedes einzelnen Bildes durch ein rekurrentes neuronales Netzwerk und
einem Schritt der Nachbearbeitung jedes einzelnen Bildes,
- Unterscheiden jedes Glyphs jeder Schriftart des Zwischenbildes durch ein entsprechendes Unterscheidungs-Neuralnetzwerk, wobei jedes einzelne Glyph als wahrscheinlich authentisch angesehen wird, wenn es einem während einer Lernphase gelernten Glyph entspricht, und
- Ausgeben eines Ausgangssignals durch Kombinieren der Ausgangssignale der neuronalen Diskriminator-Netzwerke, dessen Wert repräsentativ für die Wahrscheinlichkeit ist, dass das Kandidaten-Identitätsdokument ein authentisches Identitätsdokument oder eine Fälschung ist;
wobei das Verfahren einen vorherigen Lernschritt für jedes der Glyphen jedes der Alphabete jedes der Ausweisdokumente in einem Referenzsatz umfasst, wobei jedes Glyphen einzeln für jede Schriftart jeder Klasse gelernt wird, wobei die Klasse
jedes authentischen Ausweisdokuments bekannt ist; wobei das Lernen vorzugsweise an mehreren authentischen Ausweisdokumenten durchgeführt wird;
die Authentifizierung eines Ausweisdokuments wird durch den Satz diskriminierender neuronaler Netze durchgeführt, dessen Eingang während der Lernphase mit einem Satz von Zwischenbildern gespeist wird.

2. Verfahren nach Anspruch 1, wobei der Schritt des Zuweisens einer Klasse oder Oberklasse durch einen unbeaufsichtigten Lernalgorithmus, durch ein vortrainiertes klassifizierendes neuronales Netz, vorzugsweise ein Faltungsneuronales Netz, durchgeführt wird.

3. Verfahren nach einem der vorstehenden Ansprüche, das vor dem Schritt der Übertragung des Ausgangssignals Schritte umfasst, die darin bestehen
- Extrahieren einer Reihe von mindestens einem Bereich aus
- einem Bereich, der der gesamten oder einem Teil der maschinenlesbaren Zone (MRZ) des Kandidaten-Ausweisdokuments entspricht,
- einem Bereich, der dem oberen Banner (TOP) des potenziellen Ausweisdokuments entspricht, und
- einem Bereich, der dem äußeren Teil (EXT) des potenziellen Ausweisdokuments entspricht,
wobei jeder Bereich Glyphen aus mindestens einer gleichen Schriftart umfasst,
- individuelles Extrahieren jedes Glyphen aus der Gruppe von mindestens einem Bereich durch optische Glyphen-Erkennung, und
- Vergleichen jedes extrahierten Glyphs mit seinem entsprechenden Glyph, das während der Lernphase gelernt wurde;
wobei das Verfahren optional, wenn der Satz aus mindestens einem Bereich variable Daten umfasst, einen Schritt des Verwischens der variablen Daten während der Lernphase umfasst.

4. Verfahren nach einem der vorstehenden Ansprüche, wobei
der Schritt des Verarbeitens jedes einzelnen Bildes durch ein rekurrentes neuronales Netzwerk einen Satz von Zwischenbildern erzeugt, von denen jedes einer Segmentierung des am Ende des Glyphenerkennungsschritts erhaltenen Glyphs durch Kosegmentierung entspricht.

5. Verfahren nach einem der vorstehenden Ansprüche, wobei das generierende neuronale Netz ein Autoencoder ist, vorzugsweise ein Convolutional Autoencoder.

6. Verfahren nach einem der vorstehenden Ansprüche, wobei der Schritt des automatischen Klassifizierens das Zuweisen einer vorbestimmten Klasse auf der Grundlage mindestens eines der folgenden Merkmale umfasst
die Art des Ausweisdokuments;
das Herkunftsland oder den Herkunftsstaat des
Ausweisdokuments; die Art des
Ausweisdokuments;
die Version oder Generationsnummer des Ausweisdokuments

7. Verfahren nach einem der vorstehenden Ansprüche, das ferner einen Datenaugmentierungsschritt während der Lernphase umfasst.

8. Verfahren nach einem der vorstehenden Ansprüche, wobei das Ausgangssignal eines der folgenden ist
- eine Mehrheitsentscheidung,
- einer qualifizierten Abstimmung und
- einer gewichteten Abstimmung
Ausgangssignale von diskriminierenden neuronalen Netzen.

9. Verfahren nach einem der vorstehenden Ansprüche, das ferner einen Schritt zum Überprüfen optischer Sicherheitsmerkmale des Ausweisdokuments umfasst.

10. Verfahren nach einem der Ansprüche 3 bis 9, das einen Schritt zum Zuweisen individueller Gewichte zu den Glyphen entsprechend dem Bereich, aus dem sie extrahiert werden, umfasst.

11. Verfahren nach einem der vorstehenden Ansprüche, das einen Schritt des Betrachtens eines Kandidaten-Identitätsdokuments als authentisch durch Berechnen eines Verhältnisses der Anzahl der als gültig erkannten Glyphen zur Anzahl der als ungültig erkannten Glyphen in dem Dokument oder zur Gesamtzahl der erkannten Zeichen umfasst, möglicherweise gefolgt von einem Schritt des Schwellenwertsetzens des Verhältnisses.

12. Computerprogramm, das Programmcodeanweisungen zum Ausführen der Schritte des Verfahrens gemäß einem der vorstehenden Ansprüche umfasst, wenn das Programm auf einem Computer ausgeführt wird.

## Claims

1. Method for processing an image of a candidate identity document comprising a data page containing several glyphs from several fonts, the method comprising a step consisting of
- acquiring a digital image of the data page of the candidate identity document, optionally by a communicating object, each digital image being further extractable from a video stream recorded by said communicating object;
**characterised in that** it further comprises the steps of
- assigning a class or superclass to the candidate identity document by automatically classifying the digital image using a machine learning algorithm implemented on a set of reference images during a learning phase in which each glyph is learned individually for each font in each class,
- extracting a set of glyphs from the digital image and saving each glyph as an individual image,
- process each individual image to obtain a set of at least one intermediate image, each intermediate image corresponding to an individual glyph, each intermediate image being obtained by at least one of the following steps: A step of processing each individual image by a neural network generative neural network,
a step of processing each individual image by a recurrent neural network, and
a step of post-processing each individual image,
- discriminate each glyph of each font of said intermediate image by a respective discriminator neural network, each individual glyph being considered likely to be authentic when it corresponds to a glyph learned during a learning phase, and
- emitting an output signal by combining the output signals of the discriminator neural networks, the value of which is representative of the probability that the candidate identity document is an authentic identity document or a forgery;
the method comprising a prior learning step for each of the glyphs of each of the alphabets of each of the identity documents in a reference set, each glyph being learned individually, for each font of each class, where the class
of each authentic identity document is known; the learning being preferably implemented on several authentic identity documents;
the authentication of an identity document being performed by the discriminative neural network set, whose input is fed with a set of intermediate images during the learning phase.

2. Method according to claim 1, wherein the step of assigning a class or superclass is implemented by an unsupervised learning algorithm, by a pre-trained classifier neural network, preferably a convolutional neural network.

3. Method according to any of the preceding claims, comprising, prior to the output signal transmission step, steps consisting of
- extracting a set of at least one area from
- an area corresponding to all or part of the machine-readable zone (MRZ) of the candidate identity document,
- an area corresponding to the top banner (TOP) of the candidate identity document, and
- an area corresponding to the outer part (EXT) of the candidate identity document,
each area comprising glyphs, from at least one same font,
- individually extracting each glyph from the set of at least one area, by optical glyph recognition, and
- comparing each extracted glyph with its corresponding glyph learned during the learning phase;
the method optionally further comprising, when said set of at least one area comprises variable data, a step of blurring said variable data during the learning phase.

4. Method according to any of the preceding claims, wherein
The step of processing each individual image by a recurrent neural network produces a set of intermediate images, each of which corresponds to a segmentation of the glyph obtained at the end of the glyph recognition step, by cosegmentation.

5. Method according to any of the preceding claims, in which the generator neural network is an autoencoder, preferably a convolutional autoencoder.

6. Method according to any of the preceding claims, wherein the automatic classification step comprises assigning a predetermined class based on at least one of the following characteristics
the nature of the identity document;
the country or state of origin of the identity
document; the type of identity document;
the version or generation number of the identity document

7. Method according to any of the preceding claims, further comprising a data augmentation step during the learning phase.

8. Method according to any of the preceding claims, wherein the output signal is one of
- a majority vote,
- a qualified vote, and
- a weighted vote
output signals from discriminative neural networks.

9. Method according to any of the preceding claims, further comprising a step of checking optical security features of the identity document.

10. Method according to any of claims 3 to 9, comprising a step of assigning individual weights to the glyphs according to the area from which they are extracted.

11. Method according to any of the preceding claims, comprising a step of considering a candidate identity document to be authentic by calculating a ratio of the number of glyphs recognised as valid to the number of glyphs recognised as invalid in said document, or to the total number of recognised characters, possibly followed by a step of thresholding said ratio.

12. A computer programme comprising programme code instructions for performing the steps of the method according to any of the preceding claims, when said programme is executed on a computer.
